# EUROPEAN PATENT SPECIFICATION

(11) **EP 1 574 525 B1**
(45) Date of publication and mention of the grant of the patent: **02.05.2007**
(21) Application number: 04005939.6
(22) Date of filing: 12.03.2004
(51) Int. Cl.: C08F 4/646, C08F 4/6592, C08F 4/70, C08F 10/02

(54) **Catalyst composition for polymerization of olefins and polymerization process using the same**
Katalysatorzusammensetzung für die Polymerisation von Olefinen und Polymerisationsverfahren unter dessen Verwendung
Composition catalytique pour la polymérisation d'oléfines et procédé de polymérisation employant cette composition

(43) Date of publication of application: 14.09.2005
(73) Proprietor: Saudi Basic Industries Corporation, Riyadh 11422 (SA)
(72) Inventor: Xu, Wei, 11551 Riyadh (SA); Al-Shammari, Haif, 11551 Riyadh (SA); Palackal, Syriac, 11551 Riyadh (SA); Abu-Raqabah, Atieh, 11551 Riyadh (SA)
(74) Representative: Krijgsman, Willem

(56) References cited:
- EP-A- 1 059 300
- US-A- 4 975 403
- US-A1- 2003 225 225
- US-B1- 6 350 830
- PATENT ABSTRACTS OF JAPAN vol. 1995, no. 05, 30 June 1995 (1995-06-30) -& JP 07 048408 A (MITSUI TOATSU CHEM INC), 21 February 1995 (1995-02-21)
- PATENT ABSTRACTS OF JAPAN vol. 1995, no. 10, 30 November 1995 (1995-11-30) -& JP 07 173208 A (MITSUI TOATSU CHEM INC), 11 July 1995 (1995-07-11)
- VAN DER POL, ANDRE ET AL: "Characterization of a metallocene/co-catalyst system supported on silica by Fourier-Transform Raman spectroscopy" JOURNAL OF ORGANOMETALLIC CHEMISTRY , 651(1-2), 80-89 CODEN: JORCAI; ISSN: 0022-328X, 2002, XP002292766

## Description

The present invention relates to a catalyst composition for polymerization of α-olefins according to claim 1, as well as to a process for homopolymerization or copolymerization using that catalyst composition.

Polyolefins having a multi-modal or at least a broad molecular weight distribution can be obtained from a variety of methods, including mechanical blending, multistage reactors and mixed catalysts. Such resins have several advantages over normal polyolefins lacking a multi-modal or broad molecular weight distribution. For example, polyolefins having a multi-modal molecular weight distribution (MWD) could be processed at faster throughput rate with lower energy requirements. Such polymers are preferred because of improved properties for applications such as blow molding and/or high strength films and pipes. Polymers having a multi-modal MWD are generally characterized by having a broad MWD or more than one MWD peak, as reflected by gel permeation chromatography (GPC) curves.

The most desirable method in terms of capital expense and product properties is to prepare the broad or multi-modal resin in a single reactor using a mixture of catalysts that are capable of producing the targeted polymer blend under the same polymerization conditions. This process could avoid the need for an additional reactor and controls. The broad or multi-modal polymer fractions could be mixed more efficiently, since they are produced together.

The most frequently used mixed catalyst system for bimodal resins is based on a metallocene and a Ziegler-Natta catalyst. Due to the significant differences between the two catalysts, the segregation of the polymer during polymerization process often leads to reactor fouling and it is difficult to control its process and the product produced. Polymer particles produced from such catalyst systems are frequently not uniform in size.

Use of two metallocenes in order to produce bimodal resins has also been studied. US 4,530,914 and US 4,975,403 disclose the use of two metallocenes and alumoxane to produce bimodal resins.

The use of titanocene and zirconocene to produce bimodal resin in the presence of hydrogen is disclosed in US 5,064,797. US 5,594,078 describes a catalyst system comprising a bridged fluorenyl-containing metallocene and an unbridged metallocene for the production of bimodal olefin polymers. In US 6,150,481 it is disclosed that bimodal resin could be produced by two different metallocenes in which the indenyl was bridged through its 1-position. US 5,914,289 discloses a catalyst system comprising a bridged and a non-bridged hydrogenated indenyl or fluorenyl metallocene together with alumoxane for use in the preparation of polyolefins having a broad monomodal molecular weight distribution. In US 5,892,079 a metallocene catalyst system is disclosed which contains binuclear or multinuclear chemically distinct active sites.

Further, US 5,847,059 describes a dual supported metallocene catalyst which is able to increase its activity over that for a single supported metallocene catalyst and produces only a polymer having a relatively broad molecular weight distribution.

Further, US 6,342,622 discloses the use of particular indenyl compounds for the polymerization of olefins, which indenyl compounds are highly active catalysts giving polymers with high molecular weight. In case, a comonomer is used, this comonomer is very well incorporated into the polymer backbone.

US 6,350,830 B1 discloses a catalyst system in which the ratio of rac isomer to meso isomer of the metallocene is from 1:10 to 2:1 which can be used for the polymerization of olefins.

JP-A-7048408 (Abstract) discloses a highly stereo-regular polyolefin which is produced in a high efficiency by polymerizing an olefin using a catalyst composed of a metallocene compound containing cyclopentadienyl group bridged with biphenyl group as ligand, and a cocatalyst.

JP-A-7173208 (Abstract) discloses a metallocene compound having a 2,2'-substituted biphenyl group as bridge which may be used as a catalyst for olefin polymerization.

That catalyst systems disclosed in the prior art may be used for homopolymerization of ethylene or copolymerization of ethylene with alpha-olefin(s). In general, it is difficult, due to the similarity of the metallocenes used in combination so far, to place the comonomer in the high molecular weight fraction of a copolymer. Normally, the comonomer is better incorporated in the low molecular weight fraction, because of easier chain termination after insertion of a larger comonomer into the metal-polymer bond of the catalyst.

It is an object of the present invention, to overcome the drawbacks of the prior art and to provide a catalyst composition producing polymers having a multi-modal or at least a broad molecular weight distribution with high activity, wherein the catalyst composition provides a polymerization process with excellent processability and final product control. Further, in case a comonomer is used, this comonomer shall be more effectively placed in the high molecular weight fraction.

Further, it is an object to provide a process for polymerization of α-olefins with excellent processability and product controls using the catalyst composition of the invention. The process shall be carried out in a single reactor.

The first object is achieved by a catalyst composition for polymerization of olefins as claimed in claim 1.

It is more preferred that the first catalytic component (A) is of the formula (Ia) 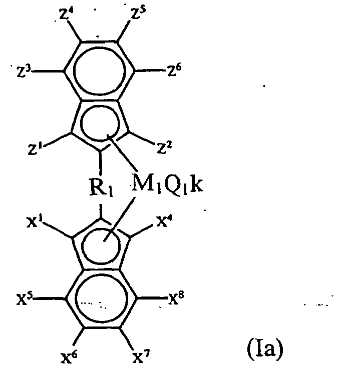 wherein Z¹ - Z⁶ and X¹ and X⁴ - X⁸ are substituents and R₁ contains at least one sp2-hybridized carbon atom that is bonded to one of the indenyl groups at the 2-position.

It is still preferred that R₁ is an alkylene-containing bridging group, an aryl-containing bridging group or a bisaryl-containing bridging group.

Also particularly preferred is that R₁ is ethylene, propylene, phenylene, biphenylene, pyridyl, furyl, thiophyl, or N-substituted pyrrols.

Most preferred is R₁ 2,2'-biphenylene.

In one embodiment of the invention is M₁ titanium, zirconium or hafnium.

Further it is preferred that Q₁ is Cl or a methyl group.

The second catalytic component (B) which is different from the catalytic component (A), may be a (bridged) metallocene, a constrained geometry catalyst (known as DOW-catalyst), a nickel-bisimine complex, a iron-pyridine bridged bisimine complex, a FI complex or a phosphinimine complex.

Most preferred, the second catalyst component (B) is Me₂Si(Ind)₂ZrCl₂, C₂H₄(Ind)₂ZrCl₂, or Me₂Si(4H-Ind)₂ZrCl₂.

The cocatalyst may be an organoaluminum compound and/or a non-coordinative ionic compound.

Further it is preferred that the cocatalyst is methylaluminoxane (MAO), modified methylaluminoxane (MMAO), triaryl borane or tetraaryl borate, such as perfluorophenyl borane and perfluorophenyl borate derivatives, or mixtures thereof.

Still preferred is that the molar ratio of the cocatalyst relative to the catalytic components, in case an organoaluminum compound is selected as the cocatalyst, is in a range of from 1:1 to 1000:1, preferably in a range of from 1:1 to 500:1, and wherein the molar ratio of the cocatalyst relative to the catalytic components, in case a non-coordinative ionic cocatalyst is selceted, is in a range of from 1:100 to 100:1, preferably in a range from 1:1 to 50:1.

Additionally it is preferred that the catalyst composition is supported on a support selected from an inorganic or organic support.

In one embodiment the support is preferably selected from the group consisting of silica, alumina, magnesia, titania, zirconia, clay, zeolithe, polystyrene, polyethylene, polypropylene, polyvinylchloride, polycarbonate, polyketone, polyvinylalcohol, polymethyl methacrylate, cellulose, graphite or mixtures thereof.

It is preferred that modifiers, promoters, electron donor reagents, scavengers, silicon containing compounds, surfactants, antistatic regants, antioxidants or fluorine containing compounds are added.

Still preferred is that alcohols, titanates, ethers, such as tetrahydrofurane, are added.

It has to be noted that aluminum alkyl, such as triisobutyl aluminum, trihexyl aluminum, triisopropyl aluminum, triethyl aluminum and trimethyl aluminum, is added as scavenger or cocatalyst to the catalyst composition.

The second object is achieved by a process for homopolymerization or copolymerization α-olefins using a catalyst composition of the invention.

It is preferrred that the α-olefin is ethylene, propylene, butene, pentene, hexene, heptene, octene or mixtures thereof.

It is still preferred that additionally one or more non-conjugated dien is present. Therefore, also amorphous or rubbery copolymers may be produced, wherein preferred dienes are 1,7 octadiene and 1,9-octadiene or norbornene derivatives.

Preferably, the process is carried out in gas phase, slurry phase or solution phase.

Finally, it is preferred that the polymerization is carried out at a temperature of 50 to 250°C.

The catalytic component (A) in the catalyst composition of the invention is the indenyl compound as disclosed in US 6,342, 622.

In detail, Q₁ may comprise one or more uni- or polyvalent anionic ligands to the transition metal M₁. As examples of such ligands, which may be the same or different, the following can be mentioned: a hydrogen, a halogen, an alkyl group, an aryl group, an aralkyl group, an alkoxy group, an aryloxy group, or a group with a heteroatom chosen from group 14, 15 or 16 of the Periodic System of Elements, such as an amine group, an amide group, a sulfur-containing compound or a phosphorous-containing compound.

Q₁ may be also a monoanionic ligand bonded to M₁ via a covalent metal-carbon bond and which is additionally capable to non-covalently interact with M₁ via one or more functional groups, for example 2,6-difluorophenyl, 2,4,6-trifluorophenyl, pentafluorophenyl, 2-alkoxyphenyl, 2,6-dialkoxyphenyl, 2-(dialkylamono)benzyl and 2,6-(dialkylamino)phenyl.

The number of Q₁ groups in the catalytic component (A) (index k in formula I) is determined by the valence of M₁ and the valence of the Q₁ group itself.

The sp2-hybridized carbon atom of R₁ may be a part of, for example, an alkylene-containing bridging group R₁ or of an aryl group forming part of the bridging group R₁. Preferably, R₁ is a bisaryl group, most preferably 2,2'-biphenylene.

The substituents X₁-X₈ may be each separately hydrogen or a hydrocarbon radical with 1-20 carbon atoms, e.g. alkyl, aryl, aryl alkyl. Further, X₁-X₄ may be a halogen atom, or an alkoxy group. Also, two adjacent hydrocarbon radicals may be connected with each other in a ring system. In this way, an indenyl can be formed by connection of X₁ and X₂, X₂ and X₃, X₃ and X₄, or fluorenyl can be formed by connection of both X₁ and X₂ and X₃ and X₄. The substituent may also comprise one or more heteroatoms from group 14, 15 or 16 of the Periodic System of the Elements.

The substituents Z₁-Z₆ may each separately be a substituent as disclosed above with regard to the substituents X.

Regarding catalytic component (B), Q₂ and Q₃ may be selected from the possible group given above for Q₁. R₂ is a bridging group which may be selected from the group consisting of - (R'R")Si-, -(R'R")Ge-, -C(R'R")-C(R"'R"")-, -(R'R")(C(R"'R""))n-, -B(R')-, -Al(R')-, -P(R')-, -P(R')(O)-, -P(R'R"R"')-, -N(R')-, -O-, -S-, -Ar-, wherein R' - R"" may be hydrogen, hydrocarbon with C₁-C₁₀₀ carbon atoms, substituted or unsubstituted, containing one or more heteroatoms which could be linked directly to the bridging atom(s). Ar is an aromatic group which could contain heteroatom(s) and could be one or more aromatic rings joined together. X is a substituent as disclosed for X₁-X₈ given for formula (I). Any cyclopentadienyl ring shown includes cyclopentadienyl derivatives, such as indenyl, fluorenyl, and heteroatom substituted cyclopentadienyl.

Surprisingly, it was found that with the catalyst composition according to the invention polymers may be produced having a multi-modal or at least a broad molecular weight distribution, wherein the catalyst composition of the invention provides a high activity and easy processability and final product control. No reactor fouling is observed during the polymerization run. Using the catalyst composition for the preparation of homopolymers, such as polyethylene, this results in a homopolymer having a multi-modal or at least a broad molecular weight distribution. For the preparation of copolymers, the catalytic component (B) produces high molecular weight polyolefins with high comonomer contents, wherein the catalytic component (A) produces low molecular weight polyolefins with low comonomer incorporations.

It is assumed, that the catalytic component (A) will lead to less accessible active centers for comonomers after activation, while catalytic component (B) generates an active center which is more accessible for comonomers. In the same time, these catalytic components have reversed effects in hydrogen. Therefore, resins produced according with the process will have comonomer more effectively placed in the high molecular weight fraction. Since the catalytic components are activated by the same cocatalyst, the catalyst composition according to the invention is greatly simplified. The process control for the catalyst composition is much easier than for bimetallic catalyst systems which contain both a metallocene and a Ziegler-Natta catalyst.

The polymers produced according to the process may be used in a wide variety of products and end use applications. Preferably, the polymers include polyethylene or copolymers of ethylene with alpha-olefin, and even more preferably include bimodal polyethylene produced in a single reactor.

The catalyst composition according to the invention may be used to make polyolefins, especially polyethylene, having a weight average molecular weight of 30000 or more, preferably 50000 or more, more preferably 100000 or more with an MWD (M_{w}/Mₙ) between 3 and 80, preferably between 6 and 50, more preferably between 9 and 40, with an I₂₁ (Flow Index, as measured at 190°C) of less than 40, a density of between 0.89 and 0.97 g/cm³. The polymers obtained by the process of the invention have an ash content of less than about 100 ppm, more preferably less than about 75 ppm and even more preferably less than about 50 ppm.

The polyolefins obtained can be processed into films, molded articles (including pipes), sheets, wire and cable coating. The films produced may further contain additives, such as slip, antiblock, antioxidants, pigments, fillers, antifog, UV stabilizers, antistats, polymer processing aids, neutralizers, lubricants, surfactants, pigments, dyes and nucleating agents. Preferred additives include silicon dioxide, synthetic silica, titanium dioxide, polydimethylsiloxane, calcium carbonate, metal stearates, calcium stearate, zinc stearate, talc, bariumsulfate, diatomaceous earth, wax, carbon black, flame retarding additives, low molecular weight resins, hydrocarbon resins, and glass beads.

### Examples

The following examples are intended to be illustrative of this invention only.

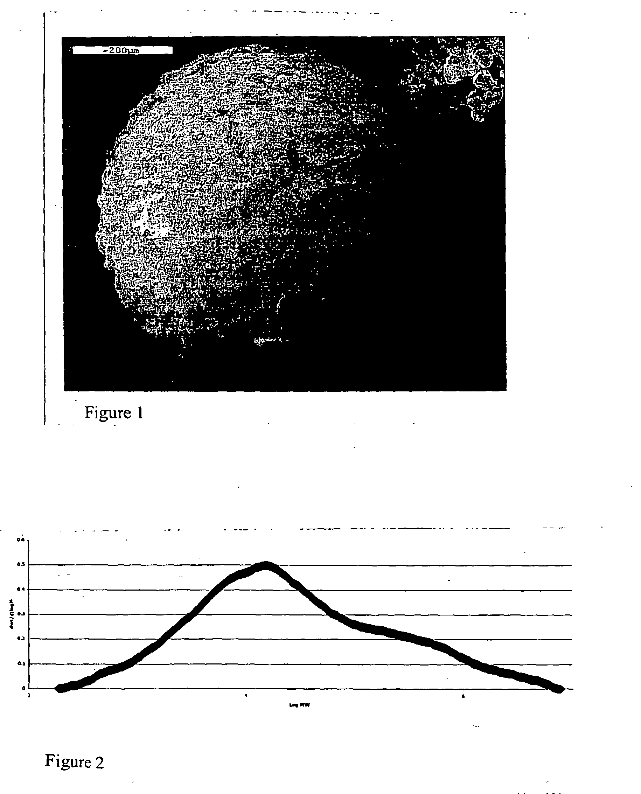

In the accompanying drawings illustrates figure 1 photograph of a polymer bead obtained by scanning electron microscopy and figure 2 shows the MWD plot of polymer obtained with the catalyst composition.

All materials were handled in a nitrogen atmosphere using either schlenk techniques or nitrogen filled glove box. Nitrogen and isopentane were supplied from a plant source and were dried through an additional bed of molecular sieves, if necessary. All other solvents were first dried over molecular sieves and if necessary sodium/potassium amalgam. The catalysts were prepared under temperature control within 0.5°C in a silicon oil bath with stirring. Most reagents were used as received from the manufacturer or supplier. Materials were used as received by the manufacturer unless otherwise noted.

### Catalyst preparation procedure

### MAO treated silica:

To illustrate the preparation of a supported metallocene catalyst, 5 grams of ES70 silica which was calcinated at 600°C and 20 mL of MAO (10% in toluene) were mixed under a nitrogen atmosphere in a 100 mL round-bottom flask equipped with a stir bar. After stirring for an hour at 100°C, the suspension was allowed to settle down. The solvents were then removed under vacuum.

### Catalyst preparation:

A mixture of 1 mL of MAO (10% in toluene) and a certain amount of catalytic component (A) and catalytic component (B) (see Table 1 below) at room temperature was added to the 1 gram of MAO treated silica. The mixture was then stirred for 1h at 50°C. All solvents were then removed by evacuation and the residue was washed with i-pentane three times followed by drying it under vacuum.

Following catalytic components have been used to prepare examples of the catalyst composition according to the invention:
A: [2,2'-bis(2-indenyl)biphenyl]zirconiumdichloride
B1: Me₂Si(Ind)₂ZrCl₂
B2: C₂H₄(Ind)₂ZrCl₂
B3: Me₂Si(4H-Ind)₂ZrCl₂
B4: bis(2,6-di-i-Pr)phenylpyridyliron(II)dichloride

### Polymerization procedure

The supported catalyst was used to prepare ethylene homopolymer and copolymers of ethylene and 1-butene. The polymerizations were carried out in a two-liter stirred autoclave charged with 1000 ml dried, deoxygenated isopentane. Hydrogen was added to control molecular weight and trimethylaluminum (TMA) + triisobutylaluminum (TIBAL) were used as scavenger. Polymerizations were carried out at 88°C and 18 bars of total pressure. Ethylene gas was used to maintain this pressure. Upon completion of the polymerization, the reactor was vented and cooled to ambient temperature to recover the polymer. Details of each polymerization and characteristics of the resins produced are provided in Table 1. A photograph made by scanning electron microscopy of a polyethylene bead of example 1 is given in figure 1 illustrating that a very spherical polymer bead is obtained. Figure 2 shows the GPC curve of the polymer of example 1 indicating that example 1 provides a polymer having a very broad molecular weight distribution.

**Table 1**

| Example # | C. Comp. A (mmol) | C. Comp.B (mmol) | H2 (%) | Comonomer 1-butene (ml) | Productivity (gPE/gCat.h) | Bulk Density (g/cm³) | M_{w} (MWD) |
|---|---|---|---|---|---|---|---|
| Example 1 | A(0.027) | B1(0.032) | 0.5 | 0 | 680 | 0.28 | 208,700 (37.8) |
| Example 2 | A(0.030) | B1(0.032) | 0.5 | 0 | 1060 | 0.35 | 99900 (9.0) |
| Example 3 | A(0.031) | B2(0.025) | 0.5 | 0 | 1320 | 0.33 | 84500 (10.5) |
| Example 4 | A(0.063) | B2(0.026) | 0.5 | 0 | 1930 | 0.36 | 81400 (11.3) |
| Example 5 | A(0.044) | B2(0.041) | 0.5 | 0 | 1330 | 0.36 | 92,000 (12.7) |
| Example 6 | A(0.03) | B2(0.03) | 0.25 | 40 | 1600 | ---- | 41,000 (12.6) |
| Example 7 | A(0.033) | B3(0.028) | 0.5 | 0 | 1310 | 0.25 | 34,800 (4.2) |
| Example 8 | A(0.03) | B4(0.05) | 0.5 | 0 | 1810 | 0.20 | 316,900 (3.7) |

## Claims

1. Catalyst composition for polymerization of olefins, comprising
a) at least two catalytic components, wherein a first catalytic component (A) is of the formula (I) 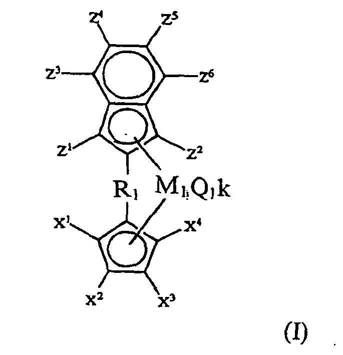 wherein: M₁ is a transition metal from the lanthanides or from group 3, 4, 5 or 6 of the Periodic System of Elements, Q₁ is an anionic ligand to M₁, k is the number of Q₁ groups and is equal to the valence of M₁ minus 2, R₁ is a bridging group and Z¹ - Z⁶ and X¹ - X⁴ are substituents, wherein R₁ contains at least one sp2-hybridized carbon atom that is bonded to the indenyl group at the 2-position, and wherein a second catalytic component (B) is also active for catalyzing the polymerization of olefins and is different from the catalytic component (A); and
b) a cocatalyst,
**characterized in that**
the second catalytic component (B) is selected from the group consisting of the formulas (II) to (VII) as follows: 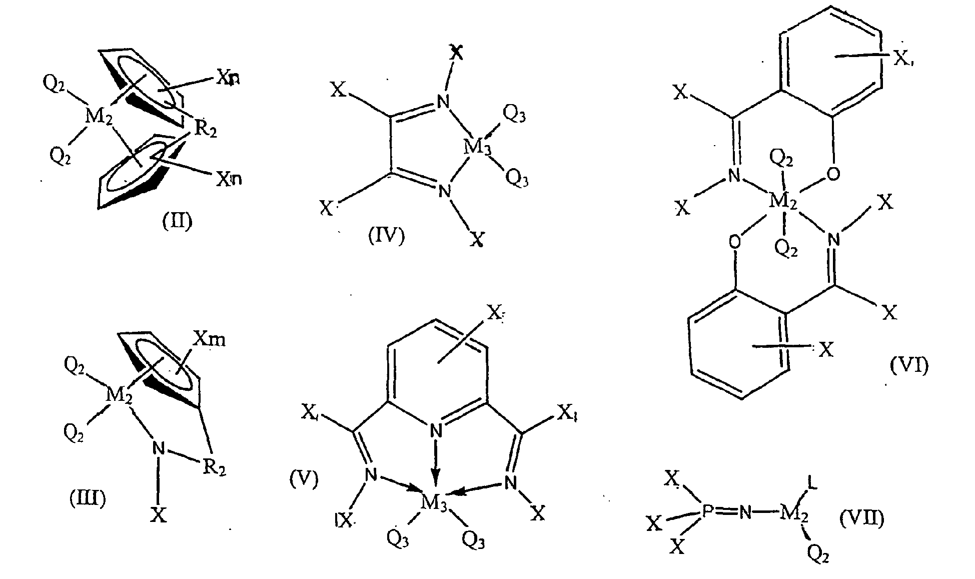 wherein M₂ is a transition metal from groups 3 to 10 of the Periodic System of the Elements, M₃ is a transition metal from group 10 of the Periodic System of the Elements, Q₂ is an anionic ligand to M₂, Q₃ is an anionic ligand to M₃, R₂ is a bridging group, X, which may be the same or different, is a substituent, n is from 1 to 5, m is from 1 to 4, L is cyclopentadienyl or its derivatives, hetero-atom substituted in a cyclopentadienyl derivatives, siloxide or phenoxide.

2. Catalyst composition according to claim 1, wherein the first catalytic component (A) is of the formula (Ia) 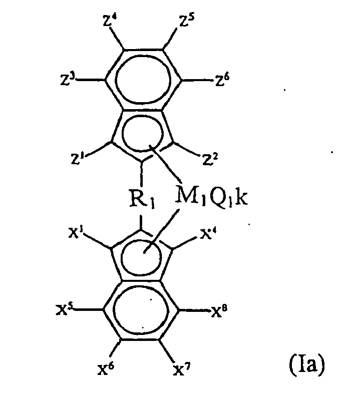 wherein Z¹ - Z⁶ and X¹ and X⁴ - X⁸ are substituents and R₁ contains at least one sp2-hybridized carbon atom that is bonded to one of the indenyl groups at the 2-position.

3. Catalyst composition according to claim 1 or 2, wherein R₁ is an alkylene-containing bridging group, an aryl-containing bridging group or a bisaryl-containing bridging group.

4. Catalyst composition according to claim 3, wherein R₁ is ethylene, propylene, phenylene, biphenylene, pyridyl, furyl, thiophyl, or N-substituted pyrrols.

5. Catalyst composition according to claim 4, wherein R₁ is 2,2'-biphenylene.

6. Catalyst composition according to any of the preceding claims, wherein M₁ is titanium, zirconium or hafnium.

7. Catalyst composition according to any of the preceding claims, wherein Q₁ is Cl or a methyl group.

8. Catalyst composition according to any of the preceding claims, wherein the second catalyst component (B) is Me₂Si(Ind)₂ZrCl₂, C₂H₄(Ind)₂ZrCl₂ or Me₂Si(4H-Ind)₂ZrCl₂.

9. Catalyst composition according to any of the preceding claims, wherein the cocatalyst is an organoaluminum compound and/or a non-coordinative ionic compound.

10. Catalyst composition according to claim 9, wherein the cocatalyst is methylaluminoxane (MAO), modified methylaluminoxane (MMAO), triaryl borane or tetraaryl borate, such as perfluorophenyl borane and perfluorophenyl borate derivatives, or mixtures thereof.

11. Catalyst composition according to any of the preceding claims, wherein the molar ratio of the cocatalyst relative to the catalytic components, in case an organoaluminum compound is selected as the cocatalyst, is in a range of from 1:1 to 1000:1, preferably in a range of from 1:1 to 500:1, and wherein the molar ratio of the cocatalyst relative to the catalytic components, in case a non-coordinative ionic cocatalyst is selceted, is in a range of from 1:100 to 100:1, preferably in a range from 1:1 to 50:1.

12. Catalyst composition according to any of the preceding claims, wherein the catalyst composition is supported on a support selected from an inorganic or organic support.

13. Catalyst composition according to claim 12, wherein the support is selected from the group consisting of silica, alumina, magnesia, titania, zirconia, clay, zeolithe, polystyrene, polyethylene, polypropylene, polyvinylchloride, polycarbonate, polyketone, polyvinylalcohol, polymethyl methacrylate, cellulose, graphite or mixtures thereof.

14. Catalyst composition according to any of the preceding claims, wherein modifiers, promoters, electron donor reagents, scavengers, silicon containing compounds, surfactants, antistatic regants, antioxidants or fluorine containing compounds are added.

15. Catalyst composition according to claim 14, wherein alcohols, titanates, ethers, such as tetrahydrofurane, are added.

16. Catalyst composition according to claim 14, wherein aluminum alkyl, such as triisobutyl aluminum, trihexyl aluminum, triisopropyl aluminum, triethyl aluminum and trimethyl aluminum, is added as scavenger or cocatalyst to the catalyst composition.

17. Process for homopolymerization or copolymerization of α-olefins using a catalyst composition according to any of the preceding claims 1 to 16.

18. Process according to claim 17, wherein the α-olefin is ethylene, propylene, butene, pentene, hexene, heptene, octene or mixtures thereof.

19. Process according to claim 17 or 18, wherein additionally one or more non-conjugated diene is present.

20. Process according to any of the claims 17 to 19, wherein the process is carried out in gas phase, slurry phase or solution phase.

21. Process according to any of the claims 17 to 20, wherein the polymerization is carried out at a temperature of 50 to 250°C.

## Patentansprüche

1. Katalysatorzusammensetzung für die Polymerisation von Olefinen, enthaltend
a) mindestens zwei katalytisch wirksame Komponenten, wobei eine erste katalytisch wirksame Komponente (A) die Formel (I) 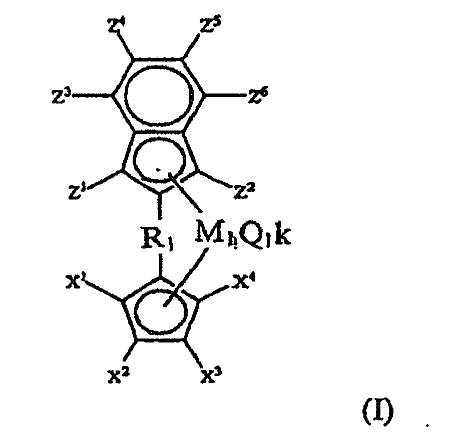 worin M₁ für ein Übergangsmetall aus den Lanthaniden oder der Gruppe 3, 4, 5 oder 6 des Periodensystems der Elemente steht, Q₁ für einen anionischen Liganden an M₁ steht, k für die Zahl der Q₁-Gruppen steht und gleich der Wertigkeit von M₁ minus zwei ist, R₁ für eine Brückengruppe steht und Z¹ - Z⁶ und X¹ - X⁴ für Substituenten stehen, wobei R₁ mindestens ein sp2-hybridisiertes Kohlenstoffatom enthält, das in der 2-Position an die Indenylgruppe gebunden ist, und worin eine zweite katalytisch wirksame Komponente (B) ebenfalls für die Katalyse der Polymerisation von Olefinen aktiv ist und von der ersten katalytisch wirksamen Komponente (A) verschieden ist; und
b) einen Cokatalysator,
**dadurch gekennzeichnet, daß** die zweite katalytisch wirksame Komponente (B) aus der Gruppe bestehend aus den folgenden Formeln (II) bis (VII) ausgewählt ist: 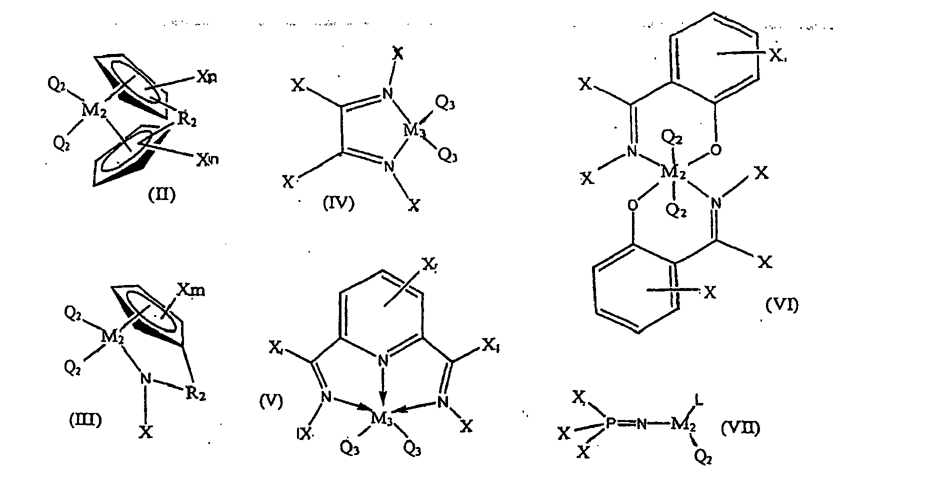 worin M₂ für ein Übergangsmetall aus den Gruppen 3 bis 10 des Periodensystems der Elemente steht, M₃ für ein Übergangsmetall aus der Gruppe 10 des Periodensystems der Elemente steht, Q₂ für einen anionischen Liganden an M₂ steht, Q₃ für einen anionischen Liganden an M₃ steht, R₂ für eine Brückengruppe steht, X gleich oder verschieden sein kann und für einen Substituenten steht, n für 1 bis 5 steht, m für 1 bis 4 steht, L für Cyclopentadienyl oder Derivate davon, heteroatomsubstituierte Cyclopentadienylderivate, Siloxid oder Phenoxid steht.

2. Katalysatorzusammensetzung nach Anspruch 1, worin die erste katalytisch wirksame Komponente (A) die Formel (Ia) 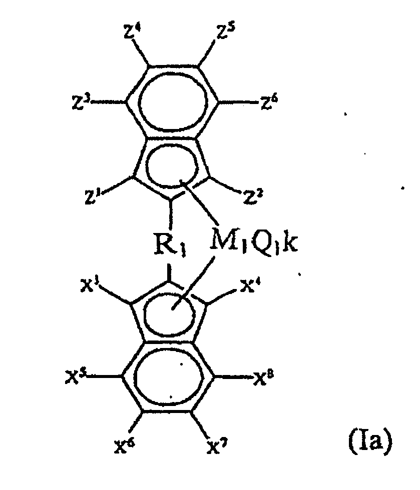 worin Z¹ - Z⁶ und X¹ und X⁴ - X⁸ für Substituenten stehen und R₁ mindestens ein sp2-hybridisiertes Kohlenstoffatom enthält, das in der 2-Position an eine der Indenylgruppen gebunden ist, aufweist.

3. Katalysatorzusammensetzung nach Anspruch 1 oder 2, worin R₁ für eine alkylenhaltige Brückengruppe, eine arylhaltige Brückengruppe oder eine bisarylhaltige Brückengruppe steht.

4. Katalysatorzusammensetzung nach Anspruch 3, in der R₁ für Ethylen, Propylen, Phenylen, Biphenylen, Pyridyl, Furyl, Thiophyl oder N-substituierte Pyrrole steht.

5. Katalysatorzusammensetzung nach Anspruch 4, worin R₁ für 2,2'-Biphenylen steht.

6. Katalysatorzusammensetzung nach einem der vorhergehenden Ansprüche, worin M₁ für Titan, Zirconium oder Hafnium steht.

7. Katalysatorzusammensetzung nach einem der vorhergehenden Ansprüche, worin Q₁ für Cl oder eine Methylgruppe steht.

8. Katalysatorzusammensetzung nach einem der vorhergehenden Ansprüche, worin es sich bei der zweiten katalytisch wirksamen Komponente (B) um Me₂Si(Ind)₂ZrCl₂, C₂H₄(Ind)₂ZrCl₂ oder Me₂Si(4H-Ind)₂ZrCl₂ handelt.

9. Katalysatorzusammensetzung nach einem der vorhergehenden Ansprüche, worin es sich bei dem Cokatalysator um eine Organoaluminiumverbindung und/oder eine nichtkoordinative ionische Verbindung handelt.

10. Katalysatorzusammensetzung nach Anpruch 9, worin es sich bei dem Cokatalysator um Methylaluminoxan (MAO), modifiziertes Methylaluminoxan (MMAO), Triarylboran oder Tetraarylborat, wie Perfluorphenylboran- und Perfluorphenylboratderivate, oder Mischungen davon handelt.

11. Katalysatorzusammensetzung nach einem der vorhergehenden Ansprüche, worin das Molverhältnis von Cokatalysator zu katalytisch wirksamen Komponenten im Fall der Wahl einer Organoaluminiumverbindung als Cokatalysator im Bereich von 1:1 bis 1000:1 und vorzugsweise im Bereich von 1:1 bis 500:1 liegt und das Molverhältnis von Cokatalysator zu katalytisch wirksamen Komponenten im Fall der Wahl eines nichtkoordinativen ionischen Cokatalysators im Bereich von 1:100 bis 100:1 und vorzugsweise im Bereich von 1:1 bis 50:1 liegt.

12. Katalysatorzusammensetzung nach einem der vorhergehenden Ansprüche, die auf einem aus einem anorganischen oder organischen Träger ausgewählten Träger geträgert ist.

13. Katalysatorzusammensetzung nach Anspruch 12, worin der Träger aus der Gruppe bestehend aus Siliciumdioxid, Aluminiumoxid, Magnesiumoxid, Titanoxid, Zirconiumoxid, Ton, Zeolith, Polystyrol, Polyethylen, Polypropylen, Polyvinylchlorid, Polycarbonat, Polyketon, Polyvinylalkohol, Polymethylmethacrylat, Cellulose, Graphit oder Mischungen davon ausgewählt ist.

14. Katalysatorzusammensetzung nach einem der vorhergehenden Ansprüche, worin Modifikatoren, Promotoren, Elektronendonator-Reagentien, Scavenger, siliciumhaltige Verbindungen, Tenside, Antistatika, Antioxidantien oder fluorhaltige Verbindungen zugesetzt sind.

15. Katalysatorzusammensetzung nach Anspruch 14, worin Alkohole, Titanate, Ether, wie Tetrahydrofuran, zugesetzt sind.

16. Katalysatorzusammensetzung nach Anspruch 14, worin der Katalysatorzusammensetzung Aluminiumalkyl, wie Triisobutylaluminium, Trihexylaluminium, Triisopropylaluminium, Triethylaluminium und Trimethylaluminium als Scavenger oder Cokatalysator zugesetzt ist.

17. Verfahren zur Homopolymerisation oder Copolymerisation von α-Olefinen unter Verwendung einer Katalysatorzusammensetzung nach einem der vorhergehenden Ansprüche 1 bis 16.

18. Verfahren nach Anspruch 17, bei dem es sich bei dem α-Olefin um Ethylen, Propylen, Buten, Penten, Hexen, Hepten, Octen oder Mischungen davon handelt.

19. Verfahren nach Anspruch 17 oder 18, bei dem zusätzlich ein oder mehrere nichtkonjugierte Diene zugegen sind.

20. Verfahren nach einem der Ansprüche 17 bis 19, das man in der Gasphase, Slurryphase oder Lösungsphase durchführt.

21. Verfahren nach einem der Ansprüche 17 bis 20, bei dem man die Polymerisation bei einer Temperatur von 50 bis 250°C durchführt.

## Revendications

1. Composition catalytique pour la polymérisation d'oléfines comprenant
a) au moins deux composants catalytiques, un premier composant catalytique (A) correspondant à la formule (I) 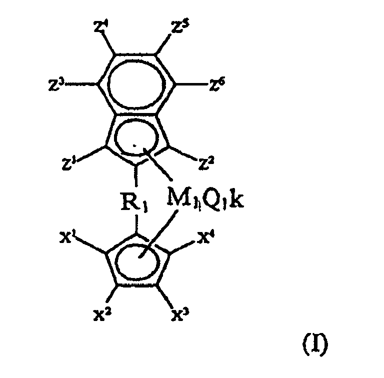 où : M₁ représente un métal de transition du groupe des lanthanides ou du groupe 3, 4, 5 ou 6 du Système Périodique des Éléments, Q₁ représente un ligand anionique à M₁, k est le nombre de groupements Q₁ et est égal à la valence de M₁ moins 2, R₁ représente un groupement de liaison et Z¹ à Z⁶ et X¹ à X⁴ représentent des substituants, où R₁ contient au moins un atome de carbone hybridé sp2 qui est lié au groupement indényle en position 2, et où un second composant catalytique (B) est également actif pour catalyser la polymérisation d'oléfines et est différent du composant catalytique (A); et
b) un cocatalyseur,
**caractérisée en ce que** le second composant catalytique (B) est choisi parmi le groupe se composant des formules (II) à (VII) comme suit: 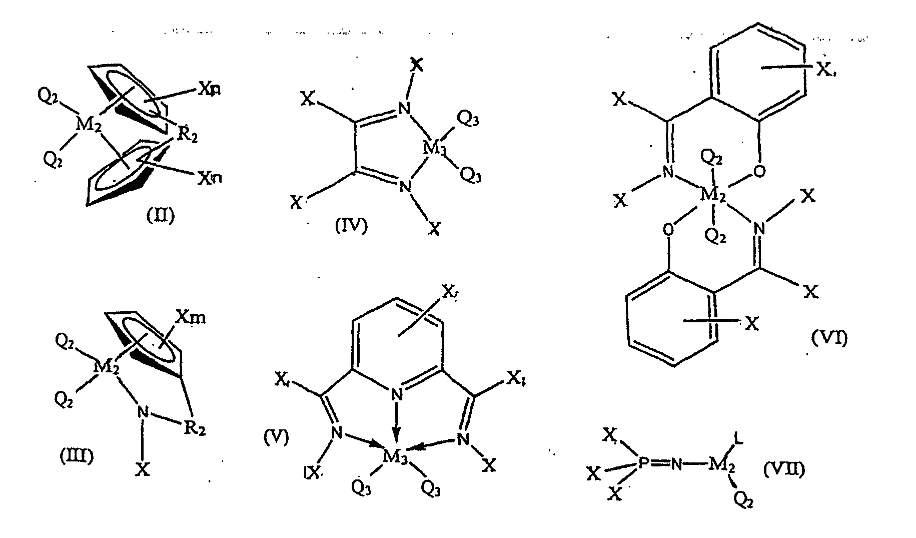 où M₂ représente un métal de transition des groupes 3 à 10 du Système Périodique des Éléments, M₃ représente un métal de transition du groupe 10 du Système Périodique des Éléments, Q₂ représente un ligand anionique à M₂, Q₃ représente un ligand anionique à M₃, R₂ représente un groupement de liaison, X, qui peut être le même ou différent, représente un substituant, n va de 1 à 5, m va de 1 à 4, L représente un groupement cyclopentadiényle ou ses dérivés, un dérivé cyclopentadiényle substitué par un hétéroatome, un groupement siloxy ou phénoxy.

2. Composition catalytique selon la revendication 1 **caractérisée en ce que** le premier composant catalytique (A) correspond à la formule (Ia) 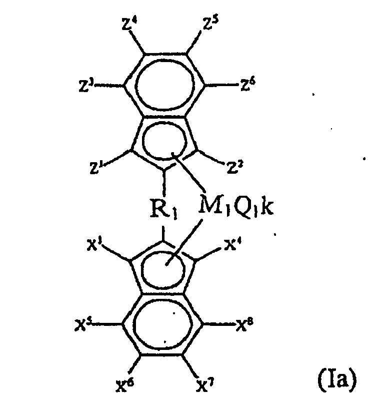 où Z¹ à Z⁶ et X¹ et X⁴ à X⁸ représentent des substituants et R₁ contient au moins un atome de carbone hybridé sp2 qui est lié à l'un des groupements indényle en position 2.

3. Composition catalytique selon la revendication 1 ou 2 **caractérisée en ce que** R₁ représente un groupement de liaison contenant un alkylène, un groupement de liaison contenant un aryle ou un groupement de liaison contenant un bisaryle.

4. Composition catalytique selon la revendication 3 **caractérisée en ce** R₁ représente un groupement éthylène, propylène, phénylène, biphénylène, pyridyle, furyle, thiophényle ou pyrrole substitué en N.

5. Composition catalytique selon la revendication 4 **caractérisée en ce que** R₁ représente un groupement 2,2'-biphénylène.

6. Composition catalytique selon l'une quelconque des revendications précédentes **caractérisée en ce que** M₁ représente du titane, du zirconium ou du hafnium.

7. Composition catalytique selon l'une quelconque des revendications précédentes **caractérisée en ce que** Q₁ représente un Cl ou un groupement méthyle.

8. Composition catalytique selon l'une quelconque des revendications précédentes **caractérisée en ce que** le second composant catalytique (B) est du Me₂Si(Ind)₂ZrCl₂, du C₂H₄(Ind)₂ZrCl₂ ou du Me₂Si(4H-Ind)₂ZrCl₂.

9. Composition catalytique selon l'une quelconque des revendications précédentes **caractérisée en ce que** le cocatalyseur est un composé organoaluminium et/ou un composé ionique non coordinatif.

10. Composition catalytique selon la revendication 9 **caractérisée en ce que** le cocatalyseur est du méthylaluminoxane (MAO), du méthylaluminoxane modifié (MMAO), du triarylborane ou du borate de tétraryle, tel que le perfluorophénylborane et les dérivés borate de perfluorophényle, ou des mélanges de ceux-ci.

11. Composition catalytique selon l'une quelconque des revendications précédentes **caractérisée en ce que** le rapport molaire du cocatalyseur et des composants catalytiques, dans le cas où un composé organoaluminium est choisi comme cocatalyseur, se situe dans la plage allant de 1:1 à 1 000:1, de préférence dans la plage allant de 1:1 à 500:1, et où le rapport molaire du cocatalyseur et des composants catalytiques, dans le cas où un cocatalyseur ionique non coordinatif est choisi, se situe dans la plage allant de 1:100 à 100:1, de préférence dans la plage allant de 1:1 à 50:1.

12. Composition catalytique selon l'une quelconque des revendications précédentes **caractérisée en ce que** la composition catalytique est supportée sur un support choisi parmi un support inorganique ou organique.

13. Composition catalytique selon la revendication 12 **caractérisée en ce que** le support est choisi parmi le groupe se composant de silice, alumine, magnésie, dioxyde de titane, zircone, argile, zéolithe, polystyrène, polyéthylène, polypropylène, polychlorure de vinyle, polycarbonate, polycétone, alcool de polyvinyle, polyméthacrylate de méthyle, cellulose, graphite ou de mélanges de ceux-ci.

14. Composition catalytique selon l'une quelconque des revendications précédentes **caractérisée en ce que** des agents modifiants, des promoteurs, des réactifs donneurs d'électrons, des agents complexants, des composés contenant du silicone, des tensioactifs, des réactifs antistatiques, des antioxydants ou des composés contenant du fluor sont ajoutés.

15. Composition catalytique selon la revendication 14 **caractérisée en ce que** des alcools, des titanates, des éthers, tels que le tétrahydrofurane, sont ajoutés.

16. Composition catalytique selon la revendication 14 **caractérisée en ce qu'**un groupement alkylaluminium, tel que le triisobutylaluminium, le trihexylaluminium, le triisopropylaluminium, le triéthylaluminium et le triméthylaluminium, est ajouté comme agent complexant ou cocatalyseur à la composition catalytique.

17. Procédé d'homopolymérisation ou de copolymérisation d'α-oléfines utilisant une composition catalytique selon l'une quelconque des revendications précédentes 1 à 16.

18. Procédé selon la revendication 17 **caractérisé en ce que** l'α-oléfine est de l'éthylène, du propylène, du butène, du pentène, de l'hexène, de l'hèptène, de l'octène ou des mélanges de ceux-ci.

19. Procédé selon la revendication 17 ou 18 **caractérisé en ce qu'**un ou plusieurs diène(s) non conjugué(s) est (sont) présent(s) de manière additionnelle.

20. Procédé selon l'une quelconque des revendications 17 à 19 **caractérisé en ce que** le procédé est mis en oeuvre en phase gazeuse, en suspension ou en solution.

21. Procédé selon l'une quelconque des revendications 17 à 20 **caractérisé en ce que** la polymérisation est mise en oeuvre à une température de 50 à 250°C.
